# EUROPÄISCHE PATENTANMELDUNG

(11) **EP 1 148 746 A2**
(43) Veröffentlichungstag der Anmeldung: **24.10.2001**
(21) Anmeldenummer: 01440092.3
(22) Anmeldetag: 30.03.2001
(51) Int. Cl.: H04Q 7/22

(54) **Verfahren zum Aufbau einer Kommunikationsverbindung**

(30) Priorität: 20.04.2000 DE 10019728
(71) Anmelder: ALCATEL, 75008 Paris (FR)
(72) Erfinder: Holzer, Gerhad, 1210 Wien (AT)
(74) Vertreter: Zinsinger, Norbert, Dipl.-Ing.

(57) **Zusammenfassung**

Die Erfindung betrifft ein Verfahren zum Aufbau einer Kommunikationsverbindung (KOM2) zwischen einem Mobilfunk-Endgerät (TEA) eines ersten Teilnehmers (A) und einer Kommunikationseinheit (TEB) eines zweiten Teilnehmers (B), sowie einen Netzwerkserver (NESERV) zur Durchführung des Verfahrens. Von dem Mobilfunk-Endgerät (TEA) wird eine Kommunikationsverbindung (KOM1) zwischen dem Mobilfunk-Endgerät (TEA) des ersten Teilnehmers (A) und dem Netzwerkserver (NESERV) initiiert. Über die initiierte Kommunikationsverbindung (KOM1) zwischen dem Mobilfunk-Endgerät (TEA) des ersten Teilnehmers (A) und dem Netzwerkserver (NESERV) werden von dem Mobilfunk-Endgerät (TEA) Identitätsdaten an den Netzwerkserver (NESERV) gesendet, die die Identität eines Fahrzeuges (CB) beschreiben. Der Netzwerkserver (NESERV) ermittelt aus diesen Identitätsdaten mittels Zugriff auf eine Zuordnungsdatenbank (DB) die Identität dieses Fahrzeuges (CB) und eine Kommunikationsadresse, die in der Zuordnungsdatenbank (DB) dem ermittelten Fahrzeug zugeordnet ist. Mittels der ermittelten Kommunikationsadresse wird der Aufbau einer Kommunikationsverbindung (KOM2) zwischen dem Mobilfunk-Endgerät (TEA) des ersten Teilnehmers (A) und der Kommunikationseinheit (TEB) des zweiten Teilnehmers (B) initiiert.

## Beschreibung

Die Erfindung betrifft ein Verfahren zum Aufbau einer Kommunikationsverbindung zwischen einem Mobilfunk-Endgerät eines ersten Teilnehmers und einer Kommunikationseinheit eines zweiten Teilnehmers, wobei bei dem Verfahren eine Kommunikationsverbindung zwischen dem Mobilfunk-Endgerät des ersten Teilnehmers und einem Netzwerkserver von dem Mobilfunk-Endgerät initiiert wird. Die Erfindung betrifft weiter einen Netzwerkserver zur Unterstützung des Aufbaus von Kommunikationsverbindung zwischen Mobilfunk-Endgeräten und Kommunikationseinheiten, wobei der Netzwerkserver mit einer ersten Kommunikationseinheit zur Kommunikation mit Mobilfunk-Endgeräten versehen ist.

Die Erfindung geht von Verfahren zum Aufbau einer Kommunikationsverbindung zwischen Mobilfunk-Endgeräten mittels der IN Architektur (IN = Intelligent Network) aus, wie es beispielsweise in US 5,345,502 beschrieben ist.

Mobilfunk-Endgeräte sind miteinander über ein Fernsprechnetz verbunden, das über Vermittlungsstellen verfügt, die die Funktion von Dienstvermittlungsstellen einer IN Architektur erbringen. Aufgrund einer in einer Verbindungsanforderung eingetragenen Dienstkennung initiieren diese Vermittlungsstellen den Aufbau einer Daten-Verbindung zu einem Netzwerkserver, der die Funktion einer Dienststeuereinrichtung in der IN Architektur erbringt.

Um zwischen zwei Mobilfunk-Endgeräten eine Fernsprechverbindung durch das Fernsprechnetz aufzubauen, wird über die Daten-Verbindung die von dem Teilnehmer des rufenden Mobilfunk-Endgeräts gewählte Fernsprechrufnummer an den Netzwerkserver übermittelt. Der Netzwerkserver ermittelt sodann mittels einer Datenbank den Aufenthaltsort des Teilnehmers, dem diese Fernsprechrufnummer zugeordnet ist, und ermittelt sodann diesem Aufenthaltsort zugeordnete Wege-Informationen. Die so ermittelten Wege-Informationen werden über die Daten-Verbindung zurück an das rufende Mobilfunk-Endgerät gesendet, das sodann mittels dieser Wege-Informationen eine Fernsprechverbindung zu dem gerufenen Mobilfunk-Endgerät aufbaut.

Der Erfindung liegt nun die Aufgabe zugrunde, einen automatischen Aufbau einer Kommunikationsverbindung zwischen einem Mobilfunk-Endgerät und einer Kommunikations-Einheit mit unbekannter Kommunikationsadresse zu ermöglich.

Diese Aufgabe wird gelöst durch ein Verfahren nach der Lehre von Anspruch 1 und einen Netzwerkserver nach der Lehre von Anspruch 6.

Der Erfindung liegt hierbei der Gedanke zugrunde, daß von einem Mobilfunk-Endgerät zum Aufbau einer Kommunikationsverbindung Identitätsdaten an einen Netzwerkserver gesendet werden, die die Identität eines Fahrzeuges (CB) beschreiben. Der Netzwerkserver ermittelt mittels Zugriff auf eine Datenbank aus diesen Identitätsdaten eine Kommunikationsadresse und initiiert mittels der ermittelten Kommunikationsadresse den Aufbau einer Kommunikationsverbindung zwischen dem Mobilfunk-Endgerät und einer Kommunikationseinheit, die gemäß der Datenbank dem Fahrzeug zugeordnet ist, das durch die Identitätsdaten beschrieben wird.

Der Vorteil der Erfindung besteht darin, daß es hierdurch ermöglicht wird, unbekannte Personen über ein sehr eindeutiges, mit geringem Aufwand zu beschreibendes und weithin erkennbares Kennzeichen innerhalb eines Kommunikationsnetzes zu adressieren, sie nämlich mittels ihres Fahrzeuges zu adressieren. Dadurch wird es ermöglicht, unbekannte Personen jederzeit spontan zu kontaktiere, beispielsweise, um persönliche Kontakte aufzubauen, sie vor Gefahren zu warnen oder sie darauf hinzuweisen, daß ihr Fahrzeug eine Einfahrt blockiert.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationssystems mit einem erfindungsgemäßen Netzwerkserver.
- Fig. 2: zeigt eine funktionelle Darstellung des Netzwerkservers nach Fig. 1 für ein erstes Ausführungsbeispiel.

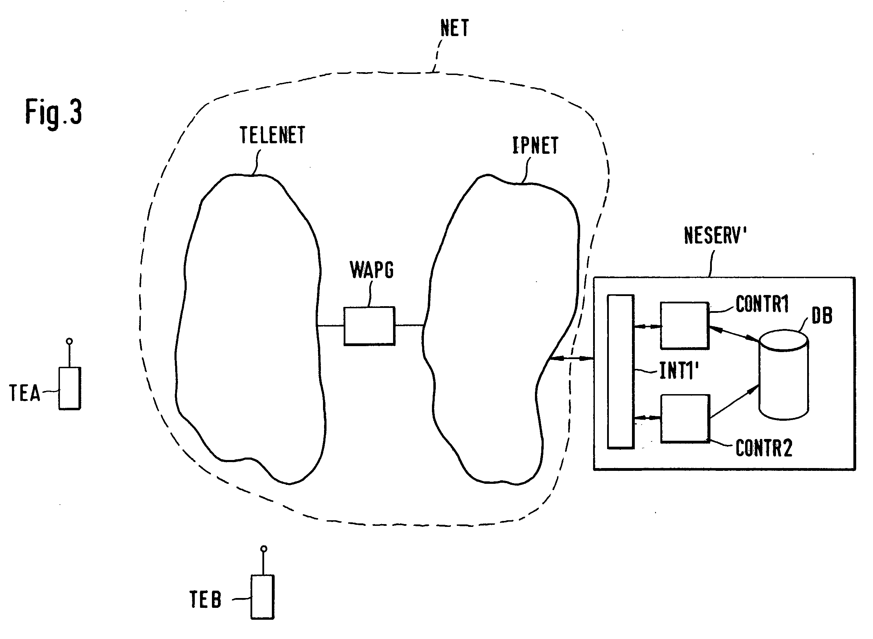

- Fig. 3: zeigt eine funktionelle Darstellung des Netzwerkservers nach Fig. 1 für ein zweites Ausführungsbeispiel.

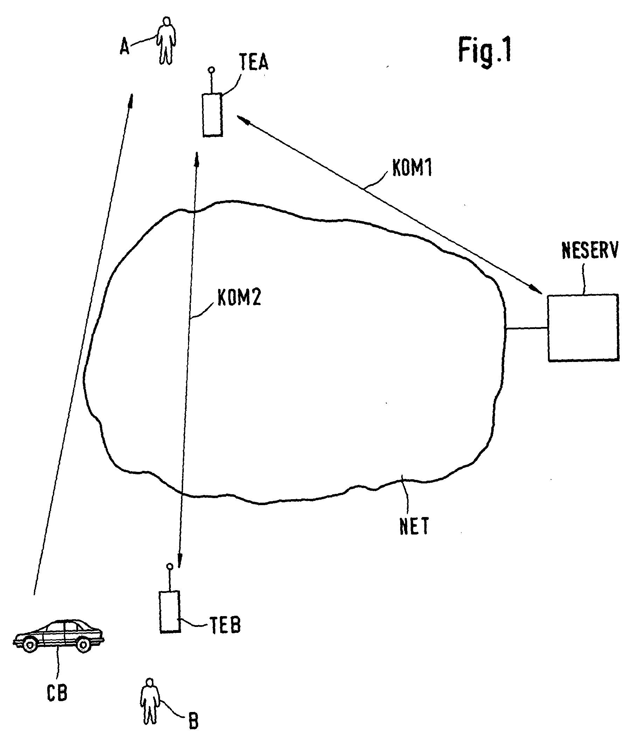

Fig. 1 zeigt ein Kommunikationsnetz NET, einen Netzwerkserver NESERV, und zwei Mobilfunk-Endgeräte TEA und TEB, die einem Teilnehmer A bzw. einem Teilnehmer B zugeordnet sind. Weiter zeigt Fig. 1 ein Fahrzeug CB, das dem Teilnehmer B zugeordnet ist. Die Anzahl der Mobilfunk-Endgeräte, Teilnehmer und Fahrzeuge ist beispielhaft gewählt.

Das Kommunikationsnetz NET ermöglicht die Kommunikation zwischen den Mobilfunk-Endgeräten TEA und TEB. Das Kommunikationsnetz NET wird hierbei von einem Mobilfunknetz, beispielsweise von einem zellularen Mobilfunknetz nach dem GSM Standard (GSM = Global System Mobile Communication) gebildet. Es ist auch möglich, daß das Kommunikationsnetz NET ein oder mehrere weitere Fernsprechnetze (Mobilfunk-Netze oder Festnetze) oder Datennetze mitumfaßt, die auch verschiedenen Netzbetreibern zugeordnet sein können.

Der Netzwerkserver NESERV stellt einen Netzdienst innerhalb des Kommunikationsnetzes NET zur Verfügung.

Der Teilnehmer A initiiert den Aufbau einer Kommunikationsverbindung zu dem Teilnehmer, dem das Fahrzeug CB zugeordnet ist, beispielsweise durch Drücken einer Folge von Eingabetasten des Mobilfunk-Endgerätes TEA oder durch ein Sprachkommando an das Mobilfunk-Endgerät TEA.

Um dieses gewünschte Kommunikationsverbindung aufzubauen, initiiert das Mobilfunk-Endgerät TEA den Aufbau einer Kommunikationsverbindung KOM1, vorzugsweise eine Datenverbindung, zwischen dem Mobilfunk-Endgerät TEA und dem Netzwerkserver NESERV. Über die initiierte Kommunikationsverbindung KOM1 zwischen dem Mobilfunk-Endgerät TEA des Teilnehmers A und dem Netzwerkserver NESERV werden sodann Identitätsdaten von dem Mobilfunk-Endgerät TEA an den Netzwerkserver NESERV gesendet, die die Identität des Fahrzeuges CB beschreiben.

Die Identitätsdaten bestehen aus dem amtlichen Kennzeichen des Fahrzeuges CB. Es ist jedoch auch möglich, als Identitätsdaten Fahrzeugtype, Farbe, Baujahr, Teile des amtlichen Kennzeichens oder andere übliche Kennzeichen eines Fahrzeuges oder eine beliebige Kombination dieser Kennzeichen zu verwenden. Die Identitätsdaten werden von dem Teilnehmer in das Mobilfunk-Endgerät TEA beispielsweise durch eintippen oder per Spracheingabe eingegeben. Die Spracherkennungseinrichtung für die Spracheingabe kann hierbei auch im Netzwerkserver NESERV angeordnet sein.

Der Netzwerkserver NESERV ermittelt aus diesen Identitätsdaten mittels Zugriff auf eine Zuordnungsdatenbank die Identität dieses Fahrzeuges und eine Kommunikationsadresse, die in der Zuordnungsdatenbank dem ermittelten Fahrzeug zugeordnet ist. Nach Fig. 1 ist das Fahrzeug CB dem Teilnehmer B zugeordnet, dem wiederum das Endgerät TEB zugeordnet ist. Nach Fig. 1 ermittelt der Netzwerkserver NESERV somit beispielweise als Kommunikationsadresse die Fernsprechrufnummer, die dem Mobilfunk-Endgerät TEB zugeordnet ist.

Hat der Netzwerkserver NESERV auf diese Weise eine Kommunikationsadresse ermittelt, so initiiert er mittels der ermittelten Kommunikationsadresse den Aufbau einer Kommunikationsverbindung KOM2 zwischen dem Mobilfunk-Endgerät TEA des Teilnehmers A und dem Mobilfunk-Endgerät TEB des Teilnehmers B.

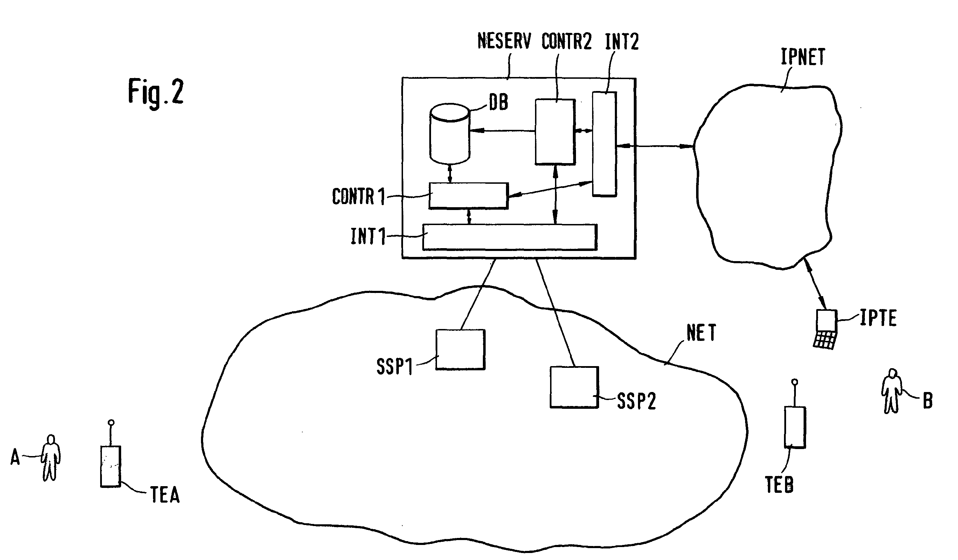

Anhand von Fig. 2 wird nun der detaillierte Aufbau des Netzwerkservers gemäß eines ersten Ausführungsbeispiels erläutert.

Fig. 2 zeigt das Kommunikationsnetz NET, ein Kommunikationsnetz IPNET, den Netzwerkserver NESERV, ein Endgerät IPTE und die Mobilfunk-Endgeräte TEA und TEB, die den Teilnehmern A bzw. B zugeordnet sind.

Das Kommunikationsnetz NET weist mehrere besonders ausgestaltete Vermittlungsstellen auf, die eine Dienstvermittlungsfunktion gemäß einer IN Architektur (IN= Intelligent Network) erbringen. Von diesen Vermittlungsstellen sind in Fig. 2 beispielhaft zwei Dienstvermittlungsstellen SSP1 und SSP2 gezeigt.

Bei dem Kommunikationsnetz IPNET handelt es sich um ein Datennetz, das als Layer 3 Kommunikationsprotokoll das IP Protokoll (IP = Internet Protocol) verwendet. Bei dem Endgerät IPTE handelt es sich um ein Endgerät, das mit den notwendigen Kommunikationskomponenten zur Kommunikation über das Kommunikationsnetz IPNET ausgestattet ist. Es handelt sich bei dem Endgerät IPTE beispielsweise um einen Computer, der mit einem Modem oder einer Netzwerkkarte ausgestattet ist.

Der Netzwerkserver NESERV wird von einem oder von mehreren über ein Kommunikationsmedium verbundenen Rechnern gebildet, auf dem eine SW Systemplattform, bestehen beispielsweise aus einem Betriebssystem und einem Datenbanksystem, und Applikationsprogramme aufsetzen. Diese Applikationsprogramme steuern bei ihrem Ablauf auf der Systemplattform des Netzwerkserver NESERV die Funktionen des Netzwerkservers NESERV gemäß der im Folgenden beschriebenen Art und Weise.

Aus funktioneller Sicht weist der Netzwerkserver eine Zuordnungsdatenbank DB, zwei Kommunikationseinheit INT1 und INT2 und zwei Steuereinheiten CONTR1 und CONTR2 auf.

Die Kommunikationseinheit INT1 dient der Kommunikation mit Mobilfunk-Endgeräten des Kommunikationsnetzes NET. Sie stellt hierzu die notwendigen Kommunikationsmechanismen zur Kommunikation mit den Dienstvermittlungsstellen SSP1 und SSP2 zur Verfügung. Der Protokollstack für diese Kommunikation besteht aus Nr. 7 Protokollen, die als Transportprotokolle verwendet werden und aus einem darauf aufsetzenden INAP Protokoll (INAP = Inelligent Network Application Protocol). Es ist auch möglich, andere Transportprotokolle zu verwenden, beispielsweise ein LAN Protokoll, beispielsweise ein ETHERNET Protokoll (LAN = Local Area Network), auf dem ein IP Protokoll aufsetzt. Auch speziell an Mobilfunk-Netze angepaßte INAP Protokolle können verwendet werden.

Innerhalb der IN Architektur erbringt der Netzwerkserver NESERV eine Dienststeuerfunktion, er stellt somit eine Dienststeuereinheit des Kommunikationsnetzes NET dar. Die für die Kommunikation zwischen Dienststeuerfunktion - Dienstvermittlungsfunktion notwendigen Funktion werden ebenfalls von der Kommunikationseinheit INT1 erbracht.

In der Zuordnungsdatenbank DB sind einem Fahrzeug Identitätsdaten, die die Identität diese Fahrzeuges beschreiben sowie ein oder mehrere Kommunikationsadressen zugeordnet und abgespeichert. Kommunikationsadressen können hierbei wiederum in ein oder mehrere Kommunikationsklassen unterteilt sein. Kommunikationsklassen sind beispielsweise Festnetz-Endgeräte, Mobilfunk-Endgeräte, SMS (=Short Message Service), Fax, Anrufbeantworter, Voice Mail System, e-mail, pager. Kommunikationsadressen können dementsprechend Fernsprechrufnummern, aber auch e-mail Adressen sein. Die Zuordnungsdatenbank weist somit beispielsweise eine Vielzahl von Datensätzen auf, die jeweils ein spezielles Fahrzeug bezeichnen und jeweils Identitätsdaten, die die Identität diese Fahrzeuges beschreiben, ein oder mehrere Kommunikationsadressen und ein oder mehrere Parameter umfassen. Die Parameter geben hierbei Bedingungen für die Auswahl der Kommunikationsadressen innerhalb des Datensatzes an.

Die Zuordnungsdatenbank DB könnte auch außerhalb des Netzwerkservers NESERV angeordnet sein und. Die Steuereinheiten CONTR1 und CONTR2 würden dann über ein Kommunikationsnetz auf die Zuordnungsdatenbank DB zugreifen.

Die Steuereinheit CONTR1 steuert die Bereitstellung eines Dienstes innerhalb des Kommunikationsnetzes NET. Sie empfängt hierzu über eine von einem Mobilfunk-Endgerät initiierte Kommunikationsverbindung zwischen diesem Mobilfunk-Endgerät und dem Netzwerkserver NESERV von dem Mobilfunk-Endgerät Identitätsdaten, die die Identität eines Fahrzeuges beschreiben.

Das Mobilfunk-Endgerät sendet hierzu beispielsweise an das Kommunikationsnetz NET eine Verbindungsanforderung mit einer Dienstkennung, die den von dem Netzwerkserver NESERV erbrachten Dienst adressiert. Eine Dienstvermittlungsstelle des Kommunikationsnetzes NET, beispielsweise die Dienstvermittlungsstelle SSP1, wird von dieser Verbindungsanforderung getriggert und sendet eine entsprechende Dienstanforderungsnachricht an den Netzwerkserver NESERV, der dadurch für die angeforderte Verbindung getriggert wird. Die Identitätsdaten können direkt in der Verbindungsanforderung und in der Dienstanforderungsnachricht an den Netzwerkserver NESERV übermittelt werden.

Es ist jedoch auch möglich, daß die Steuereinheit CONTR1 den Aufbau einer weiteren Verbindung, beispielsweise eines Sprachkanals, zwischen dem Mobilfunk-Endgerät und dem Netzwerkserver NESERV veranlaßt, beispielsweise den Aufbau einer Verbindung mit einem mit einer Spracherkennungseinrichtung ausgestatteten Dienstunterstützungssystem des Netzwerkservers NESERV veranlaßt. Über diese weitere Verbindung werden dann die Identitätsdaten an die Steuereinheit CONTR1 übertragen.

Beim Empfang der Identitätsdaten ermittelt die Steuereinheit CONTR1 mittels Zugriff auf die Zuordnungsdatenbank DB aus diesen Identitätsdaten die Identität dieses Fahrzeuges und eine Kommunikationsadresse, die in der Zuordnungsdatenbank DB dem ermittelten Fahrzeug zugeordnet ist.

Die Steuereinheit CONTR1 greift hierzu mittels der Identitätsdaten als Zugriffsschlüssel auf die Zuordnungsdatenbank DB zu und wählt denjenigen Datensatz aus den in der Zuordnungsdatenbank DB abgespeicherten Datensätzen aus, dessen Identitätsdaten die größte Übereinstimmung mit den empfangenen Identitätsdaten haben. Ist in dem Datensatz nur eine Kommunikationsadresse eingetragen, so ließt sie diese Kommunikationsadresse aus der Zuordnungsdatenbank DB aus und ermittelt diese Kommunikationsadresse als die dem ermittelten Fahrzeug zugeordnete Kommunikationsadresse.

Sind mehrere Kommunikationsadressen in dem Datensatz eingetragen, so wählt sie mittels der in dem ausgewählten Datensatz abgespeicherten Parameterdaten eine dieser Kommunikationsadressen aus und ermittelt diese Kommunikationsadresse als die dem ermittelten Fahrzeug zugeordnete Kommunikationsadresse.

Die Parameterdaten definieren hierbei ein dem Fahrzeug zugeordnetes persönliches Nutzerprofil. Wenn in der Zuordnungsdatenbank DB einem Fahrzeug ein Satz von mehreren Kommunikationsadressen zugeordnet ist, so wird von der Steuereinheit mittels diesem dem Fahrzeug zugeordneten persönlichen Nutzerprofils eine oder auch mehrer (Anwendung weiterer Kriterien) Kommunikationsadressen aus diesem Satz von Kommunikationsadressen ausgewählt.

Auf den Eintrag von Parameterdaten in die Zuordnungsdatenbank DB oder auf die Auswertung dieser Parameterdaten kann auch verzichtet werden.

Weiter ist es auch möglich, daß von der Steuereinheit CONTR1 die Identität desjenigen Mobilfunk-Endgerätes ermittelt wird, das die Kommunikationsverbindung zu dem Netzwerkserver NESERV initiiert hat. Wenn in der Zuordnungsdatenbank DB dem ermittelten Fahrzeug ein Satz von mehreren Kommunikationsadressen zugeordnet ist, wird sodann von der Steuereinheit CONTR1 mittels eines dem ermittelten Mobilfunk-Endgerät zugeordneten persönlichen Nutzerprofils eine oder mehrer Kommunikationsadressen aus diesem Satz von Kommunikationsadressen für die Initiierung der Kommunikationsverbindung ausgewählt. Diese persönlichen Benutzerprofile können hierbei in einem separaten Teil der Zuordnungsdatenbank DB oder in demjenigen Datensatz abgespeichert werden, der dem Fahrzeug zugeordnet ist, das dem Teilnehmer des ermittelten Mobilfunk-Endgerätes zugeordnet ist. Das dem ermittelten Mobilfunk-Endgerät zugeordnete persönliche Benutzerprofile kann hierbei beispielsweise diejenige Kommunikationsklasse bezeichnen, über die die Kommunikationsverbindung aufgebaut werden soll.

Es ist natürlich auch möglich, sowohl das persönliches Benutzerprofil des ermittelten Mobilfunk-Endgeräts als auch das persönliches Benutzerprofil des ermittelten Fahrzeuges zur Ermittlung der Kommunikationsadresse auszuwerten. Auch weitere Kriterien für die Auswahl der Kommunikationsadresse, beispielsweise Eingabedaten von dem Teilnehmer des Mobilfunk-Endgerätes, Zeit- oder Ortsinformationen, können herangezogen werden.

Hat die Steuereinheit CONTR1 die Kommunikationsadresse ermittelt, so initiiert sie mittels der ermittelten Kommunikationsadresse den Aufbau einer Kommunikationsverbindung zwischen dem Mobilfunk-Endgerät, von dem sie die Identitätsdaten empfangen hat, und der Kommunikationseinheit, die über die ermittelte Kommunikationsadresse adressiert wird.

Die Steuereinheit CONTR1 kann den Aufbau dieser Kommunikationsverbindung beispielsweise dadurch initiieren, daß sie einen entsprechenden Steuerbefehl mit der ermittelten Kommunikationsadresse an ein Fernsprechnetz sendet, dem dieses Mobilfunk-Endgerät zugeordnet ist, also beispielsweise einen entsprechenden Steuerbefehl an das Kommunikationsnetz NET sendet. Sie sendet hierzu beispielsweise ein INAP Kommando an die Dienstvermittlungsstelle SSP1, die diese anweist, die "wartende" Verbindungsanforderung mit dieser Kommunikationsadresse als Rufnummer des gerufenen Teilnehmers weiterzuleiten und somit eine Rufumleitung zu dieser Kommunikationsadresse zu initiieren. Weiter kann sie auch durch einen entsprechenden Steuerbefehl den Verbindungsaufbau zu einem SMS Server oder einem Internet-Gateway veranlassen.

Eine weitere Möglichkeit besteht darin, daß die Steuereinheit CONTR1 die Kommunikationsadresse zu dem Mobilfunk-Endgerät zurücksendet, das auf den Empfang dieser Nachricht selbständig den Verbindungsaufbau initiiert.

Die Steuereinheit CONTR2 und die Kommunikationseinheit INT2 dient dem Eintrag von Datensätzen in die Zuordnungsdatenbank DB. Auf diese beiden Einheiten könnte auch verzichtet werden.

Die Kommunikationseinheit INT2 stellt die notwendigen Kommunikationsmechanismen zur Kommunikation über das Kommunikationsnetz IPNET bereit.

Die Steuereinheit CONTR2 ermöglicht den Eintrag von Identitätsdaten und zugeordneten Kommunikationsadressen zu Fahrzeugen in die Zuordnungsdatenbank DB. Mittels der Steuereinheit CONTR2 können somit Teilnehmer eines Kommunikationsnetzes, beispielsweise Teilnehmer des Kommunikationsnetzes NET, selbständig Datensätze innerhalb der Zuordnungsdatenbank DB für ihre Fahrzeuge anlegen. Die Steuereinheit CONTR2 stellt hierbei ein Benutzer-Interface für die Eingabe dieser Daten in die Zuordnungsdatenbank DB bereit.

Der Zugang auf die Steuereinheit CONTR2 erfolgt vorzugsweise über die Kommunikationseinheit INT2, beispielsweise mittels des Endgerätes IPTE. Die Steuereinheit CONTR2 stellt somit Teilnehmern ein WEB Interface bereit. Der Zugang auf die Steuereinheit CONTR2 kann hierbei auch mittels eines Endgeräts erfolgen, das das WAP Protokoll (WAP= Wireless Application Protocol) unterstützt. Es ist jedoch auch möglich, daß die Steuereinheit CONTR2 anstelle dieses Interfaces oder zusätzlich zu diesem Interface einen IN Dienst bereitstellt, der es ermöglicht, mittels eines normalen Endgerätes, vorzugsweise eines Mobilfunk-Endgerätes, den Eintrag von Datensätzen in die Zuordnungsdatenbank DB zu ermöglichen. In diesem Fall würde der Zugriff auf die Steuereinheit CONTR2 über die Kommunikationseinheit INT1 erfolgen.

Anhand von Fig. 2 wird nun der detaillierte Aufbau eines Netzwerkservers gemäß eines zweiten Ausführungsbeispiels erläutert.

Fig. 2 zeigt das Kommunikationsnetz NET sowie einen Netzwerkserver NESERV' und die Mobilfunk-Endgeräte TEA und TEB.

Das Kommunikationsnetz NET wird in diesem Ausführungsbeispiel von einem Kommunikationsnetz TELENET und einem Kommunikationsnetz IPNET' gebildet, die über ein WAP-Gateway WAPG miteinander verbunden sind.

Das WAP-Gateway WAPG führt eine Übersetzung "normaler" Internet Dokumente in Dokumente nach dem WAP Standard durch.

Bei dem Kommunikationsnetz TELENET handelt es sich um ein Fernsprechnetz, das die Sprach-Kommunikation zwischen den Mobilfunk-Endgeräten TEA und TEB ermöglicht. Bei dem Kommunikationsnetz IPNET' handelt es sich um ein Datennetz entsprechemd dem Kommunikationsnetz IPNET nach Fig.2.

Der Netzwerkserver NESERV' ist ein Internet-Server ist, der mittels des WAP Protokolls Dienste in dem Kommunikationsnetz TELENET bereitstellt. Das Mobilfunk-Endgerät TEA ist mit einer zusätzlichen Funktionalität ausgerüstet, die es ihm ermöglich, mittels des WAP Protokolls über das WAP-Gateway WAPG mit dem Netzwerkserver NESERV' zu kommunizieren. Es ist hierbei bei entsprechender Ausgestaltung des Netzwerkservers NESERV' auch möglich, auf das WAP-Gateway WAPG zu verzichten.

Der Netzwerkserver NESERV' ist bis auf die im Folgenden geschilderten Unterschiede wie der Netzwerkserver NESERV nach Fig. 2 aufgebaut. Er weist aus funktioneller Sicht ein Kommunikationseinheit INT1' sowie die Steuereinheiten CONTR1 und CONTR2 und die Zuordnungsdatenbank DB auf, die entsprechend nach Fig. 2 ausgestaltet sind.

Die Kommunikationseinheit INT1' verfügt über die notwendigen Funktionseinheiten zur Kommunikation über das Kommunikationsnetz IPNET. Weiter steuert es den Dialog mit dem Mobilfunk-Endgerät TEA und stellt die notwendigen Kommunikationsfunktionen zur Bereitstellung eines WAP basierten Dienstes innerhalb des Kommunikationsnetzes TELNET bereit. Je nach Ausstattung der Kommunikationseinheit INT1' ist es hierbei möglich, auf das WAP-Gateway WAPG zu verzichten. Bei entsprechender Ausgestaltung der Kommunikationseinheit INT1' ist es so beispielsweise möglich, den Netzwerkserver direkt mit dem Kommunikationsnetz TELENET zu verbinden.

In dem Mobilfunk-Endgerät TEA ist entweder ein spezieller Client für die hier beschriebene Art des Verbindungsaufbaus mit einem speziellen Benutzerinterface vorinstalliert oder das Mobilfunk-Endgerät TEA verfügt über einen Browser, auf den von dem Netzwerkserver NESERV eine entsprechende Eingabeseite zur Eingabe der Identitätsdaten, die die Identität eines Fahrzeuges beschreiben, heruntergeladen wird. Auch ein interaktiver Dialog mit dem Netzwerkserver NESERV kann über ein derart gestaltetes Benutzerinterface ermöglicht werden.

Die über dieses Benutzer-Interface eingegebenen Identitätsdaten werden über eine von dem Mobilfunk-Endgerät TEA initiierte Kommunikationsverbindung über das WAP-Gateway WAPG und das Kommunikationsnetz IPNET' an den Netzwerkserver NESERV gesendet. Der Netzwerkserver NESERV initiiert sodann, beispielsweise durch Senden eines entsprechenden Steuerbefehls an das Kommunikationsnetz TELENET, mittels der ermittelten Kommunikationsadresse den Aufbau einer Kommunikationsverbindung zwischen dem Mobilfunk-Endgerät TEA und der der ermittelte Kommunikationsadresse zugeordneten Kommunikationseinheit.

## Patentansprüche

1. Verfahren zum Aufbau einer Kommunikationsverbindung (KOM2) zwischen einem Mobilfunk-Endgerät (TEA) eines ersten Teilnehmers (A) und einer Kommunikationseinheit (TEB) eines zweiten Teilnehmers (B), wobei bei dem Verfahren eine Kommunikationsverbindung (KOM1) zwischen dem Mobilfunk-Endgerät (TEA) des ersten Teilnehmers (A) und einem Netzwerkserver (NESERV) von dem Mobilfunk-Endgerät (TEA) initiiert wird, **dadurch gekennzeichnet, daß** über die initiierte Kommunikationsverbindung (KOM1) zwischen dem Mobilfunk-Endgerät (TEA) des ersten Teilnehmers (A) und dem Netzwerkserver (NESERV) von dem Mobilfunk-Endgerät (TEA) Identitätsdaten an den Netzwerkserver (NESERV) gesendet werden, die die Identität eines Fahrzeuges (CB) beschreiben, daß der Netzwerkserver (NESERV) aus diesen Identitätsdaten mittels Zugriff auf eine Zuordnungsdatenbank (DB) die Identität dieses Fahrzeuges (CB) und eine Kommunikationsadresse ermittelt, die in der Zuordnungsdatenbank (DB) dem ermittelten Fahrzeug zugeordnet ist, und daß der Aufbau einer Kommunikationsverbindung (KOM2) zwischen dem Mobilfunk-Endgerät (TEA) des ersten Teilnehmers (A) und der Kommunikationseinheit (TEB) des zweiten Teilnehmers (B) mittels der ermittelten Kommunikationsadresse initiiert wird.

2. Verfahren nach Anspruch 1, **dadurch gekennzeichnet, daß** die Identitätsdaten das Kennzeichen des Fahrzeuges beschreiben.

3. Verfahren nach Anspruch 1, **dadurch gekennzeichnet, daß** von dem Netzwerkserver (NESERV) als Kommunikationsadresse eine Fernsprechrufnummer ermittelt wird, die der Kommunikationseinheit (TEB) des zweiten Teilnehmer (B) zugeordnet ist.

4. Verfahren nach Anspruch 1, **dadurch gekennzeichnet, daß**, wenn in der Zuordnungsdatenbank (DB) einem Fahrzeug ein Satz von mehreren Kommunikationsadressen zugeordnet ist, von dem Netzwerkserver (NESERV) mittels eines dem ermittelten Fahrzeug zugeordneten persönlichen Nutzerprofils eine oder mehrer Kommunikationsadressen aus diesem Satz von Kommunikationsadressen für die Initiierung der Kommunikationsverbindung (KOM2) ausgewählt werden.

5. Verfahren nach Anspruch 1, **dadurch gekennzeichnet, daß** von dem Netzwerkserver (NESERV) die Identität desjenigen Mobilfunk-Endgerätes (TEA) ermittelt wird, das die Kommunikationsverbindung (KOM1) zu dem Netzwerkserver (NESERV) initiiert hat und daß, wenn in der Zuordnungsdatenbank (DB) dem ermittelten Fahrzeug ein Satz von mehreren Kommunikationsadressen zugeordnet sind, von dem Netzwerkserver (NESERV) mittels eines dem ermittelten Mobilfunk-Endgerätes (TEA) zugeordneten persönlichen Nutzerprofils eine oder mehrer Kommunikationsadressen aus diesem Satz von Kommunikationsadressen für die Initiierung der Kommunikationsverbindung (KOM2) ausgewählt werden.

6. Netzwerkserver (NESERV) zur Unterstützung des Aufbaus von Kommunikationsverbindung zwischen Mobilfunk-Endgeräten (TEA) und Kommunikationseinheiten (TEB), wobei der Netzwerkserver (NESERV) mit einer ersten Kommunikationseinheit (INT1) zur Kommunikation mit Mobilfunk-Endgeräten versehen ist,
**dadurch gekennzeichnet, daß** der Netzwerkserver (NESERV) mit einer Steuereinheit (CONTR1) versehen ist, die so ausgestaltet ist, daß sie über eine von einem Mobilfunk-Endgerät (TEA) initiierte Kommunikationsverbindung (KOM1) zwischen diesem Mobilfunk-Endgerät (TEA) und dem Netzwerkserver (NESERV) von dem Mobilfunk-Endgerät (TEA) Identitätsdaten empfängt, die die Identität eines Fahrzeuges (CB) beschreiben, und daß sie beim Empfang der Identitätsdaten mittels Zugriff auf eine Zuordnungsdatenbank (DB) aus diesen Identitätsdaten die Identität dieses Fahrzeuges (CB) und eine Kommunikationsadresse ermittelt, die in der Zuordnungsdatenbank (DB) dem ermittelten Fahrzeug (CB) zugeordnet ist, und daß die Steuereinheit (CONTR1) weiter so ausgestaltet ist, daß sie den Aufbau einer Kommunikationsverbindung (KOM2) zwischen dem Mobilfunk-Endgerät (TEA), von dem sie die Identitätsdaten empfangen hat, und einer der ermittelten Kommunikationsadresse zugeordneten Kommunikationseinheit (TEB) mittels der ermittelten Kommunikationsadresse initiiert.

7. Netzwerkserver nach Anspruch 6, **dadurch gekennzeichnet, daß** die Steuereinheit (CONTR1) weiter so ausgestaltet ist, daß sie den Aufbau der Kommunikationsverbindung (KOM2) zwischen dem Mobilfunk-Endgerät (TEA), von dem sie die Identitätsdaten empfangen hat, und der Kommunikationseinheit (TEB) dadurch initiiert, daß sie einen entsprechenden Steuerbefehl mit der ermittelten Kommunikationsadresse an ein Fernsprechnetz sendet, dem dieses Mobilfunk-Endgerät (TEA) zugeordnet ist.

8. Netzwerkserver nach Anspruch 6, **dadurch gekennzeichnet, daß** der Netzwerkserver mit einer weiteren Steuereinheit (CONTR2) versehen ist, die so ausgestaltet ist, daß sie den Eintrag von Identitätsdaten und zugeordneten Kommunikationsadressen zu Fahrzeugen in die Zuordnungsdatenbank (DB) durch einen dem jeweiligen Fahrzeug zugeordneten Teilnehmer eines Kommunikationsnetzes (NET, IPNET) ermöglicht.

9. Netzwerkserver nach Anspruch 6, **dadurch gekennzeichnet, daß** der Netzwerkserver (NESERV) eine Dienststeuereinheit eines Fernsprechnetzes ist.

10. Netzwerkserver (NESERV) nach Anspruch 6, **dadurch gekennzeichnet, daß** der Netzwerkserver eine Internet-Server ist, der mittels des WAP Protokolls Dienste in einem Fernsprechnetz bereitstellt.
